# EUROPÄISCHE PATENTANMELDUNG

(11) **EP 2 458 181 A1**
(43) Veröffentlichungstag der Anmeldung: **30.05.2012**
(21) Anmeldenummer: 10193135.0
(22) Anmeldetag: 30.11.2010
(51) Int. Cl.: F02C 9/46, F02C 9/28, F02C 9/38, F02C 9/36

(54) **Verfahren zum Betreiben einer Gasturbine, Vorrichtung zum Regeln des Betriebs einer Gasturbine und Kraftwerk**

(71) Anmelder: Siemens Aktiengesellschaft, 80333 München (DE)
(72) Erfinder: Deuker, Eberhard, 45481, Mülheim an der Ruhr (DE); Kock, Boris Ferdinand, 40878, Ratingen (DE)

(57) **Zusammenfassung**

Die Erfindung betrifft ein Verfahren zum Betreiben einer Gasturbine (40), eine Vorrichtung (60) zum Regeln des Starts bzw. des Betriebs einer Gasturbine (40) sowie ein Kraftwerk (42). Um einen sicheren Betrieb der Gasturbine (40) während des Startens der Gasturbine, bei einem Brennstoffwechsel und/oder bei Lastabwurf trotz eines nur vergleichsweise geringen Versorgungsdrucks des Brennstoffnetzes (13) zu ermöglichen, ist vorgesehen, dass ein Brennstoffvolumen (BV) mit einem im Vergleich zum Versorgungsdruck im Brennstoffnetz (13) wesentlich erhöhten Druck bereitgestellt wird und im Bedarfsfall kurzfristig dem dem Brennstoffnetz (13) entnommenen Brennstoff (B) zu dessen Druckerhöhung zuzuführen. Durch die Bereitstellung eines vergleichsweise hohen Brennstoffdrucks kann die Pilotflamme in den erforderlichen Betriebsfällen stabilisiert brennen. Thermoakustische Schwingungen sowie ein Flammenverlöschen können auch vermieden werden, obwohl der vom Brennstoffnetz (13) dauerhaft bereitgestellte Versorgungsdruck vergleichsweise gering ist.

## Beschreibung

Die Erfindung betrifft ein Verfahren zum Betreiben einer Gasturbine, mit den Schritten:
- stetige Entnahme von gasförmigem Brennstoff aus einem Brennstoffnetz und
- Verbrennen des Brennstoffs unter Zugabe von Verbrennungsluft in zumindest einer Brennkammer der Gasturbine. Ferner betrifft die Erfindung eine Vorrichtung zum Regeln des Betriebs einer Gasturbine. Abschließend betrifft die Erfindung ein Kraftwerk umfassend eine Gasturbine mit zumindest einer Brennkammer und einem Verdichter, wobei der Brennkammer vom Verdichter bereitgestellte Verbrennungsluft und einem Brennstoffnetz stetig entnehmbarer Brennstoff zuführbar ist.

Stationäre Gasturbinen und Verfahren zum Betrieb der Gasturbinen sind aus dem verfügbaren Stand der Technik in umfangreicher Art und Weise bekannt. Gasturbinen moderner Bauart, welche zur Erzeugung elektrischer Energie eingesetzt werden, weisen in der Regel einen axial durchströmbaren Verdichter, eine oder mehrere Brennkammern und eine Turbineneinheit auf. Im Betrieb wird ein der Brennkammer zugeführter Brennstoff mit Hilfe der vom Verdichter verdichteten Umgebungsluft zu einem Heißgas verbrannt, welches sich in der Turbineneinheit an dem Rotor der Gasturbine arbeitsleistend entspannt. Der Rotor treibt dann einen Generator an, welcher die mechanische Energie in elektrische Energie verlustarm umwandelt und in ein Stromverteilungsnetz einspeist.

Beim Starten der Gasturbine wird dessen Rotor mit Hilfe einer Antriebsvorrichtung auf eine Zünddrehzahl gebracht, wonach durch Einspeisen eines Pilot-Brennstoffstroms in die Brennkammer dieser gezündet wird. Anschließend zündet die Pilotflamme einen Haupt-Brennstoffstrom, welcher über separate Brenner und/oder Brennstoffdüsen auch in die Brennkammer einspritzt wird. Gleichzeitig wird die Antriebsvorrichtung vom Rotor entkoppelt. Der Rotor wird dann nur noch von dem bei der Verbrennung entstehenden Heißgas angetrieben. Mit Erreichen der Betriebsdrehzahl, zumeist 3000 min⁻¹ oder 3600 min⁻¹, endet der Startvorgang der Gasturbine. Anschließend kann der Generator mit der Netzfrequenz des Stromverteilungsnetzes synchronisiert und diesem aufgeschaltet werden.

Die Zuführung von Pilot-Brennstoff und Haupt-Brennstoff zu den entsprechenden Brennern bzw. Düsen erfolgt über getrennt arbeitende Leitungssysteme mit darin angeordneten Ventilen, mit denen sich das Volumen des jeweilig zugeführten Brennstoffs und dessen Druck einstellen lässt.

Als Brennstoff werden dabei sowohl flüssige als auch gasförmige Brennstoffe verwendet. Zur Erzeugung einer besonders effizienten und emissionsarmen Verbrennung in der Brennkammer ist es bekannt, die Verbrennung des Haupt-Brennstoffmassenstroms durch die Pilotflamme stetig zu unterstützen. Als Pilotbrennstoff wird häufig ein Brenngas, beispielsweise Erdgas verwendet.

Aufgrund der zur Erzeugung von großen Mengen an elektrischer Energie erforderlichen großen Mengen an Brennstoff sind die Brennstoffleitungssysteme der Gasturbine häufig an ein Brennstoffnetz angeschlossen, aus welchem dauerhaft der Brennstoff in der benötigten Menge über einen längeren Zeitraum entnommen werden kann. Ggf. ist zwischen dem Brennstoffnetz und dem Brennstoffleitungssystem noch ein zusätzlicher Gaskompressor geschaltet, um den Versorgungsdruck des Brennstoffnetzes zuverlässig auf ein höheres Maß anzuheben, mit dem ein sicherer Betrieb der Gasturbine gewährleistet werden kann. Der erforderliche Brennstoffdruck beim Einspeisen in die Brennkammer liegt dabei oberhalb des vom Verdichter der Gasturbine geleisteten Druckverhältnisses. Folglich ist das Druckgefälle so eingestellt, dass der Brennstoff auch tatsächlich in die Brennkammer einströmt. Der vom Brennstoffnetz bereitzustellenden bzw. vom zusätzlichen Gasverdichter zu liefernde Versorgungsdruck kann sogar weit oberhalb des vom Verdichter geleisteten Druckverhältnisses liegen, da insbesondere beim Beschleunigen des Rotors auf die Betriebsdrehzahl und bei Lastabwurf sehr große Mengen an Pilotbrennstoff benötigt werden, um die Hauptflamme zu stabilisieren und unerwünschte thermoakustische Schwingungen sowie Flammverlöschen sicher zu vermeiden. Pilotbrenner, welche eine vorgemischte Flamme erzeugen - so genannte Vormischpilotbrenner - weisen zudem vergleichsweise kleine Gasaustrittsbohrungen auf, welche eine weitere Erhöhung des ohnehin schon hohen Gasversorgungsdrucks erforderlich machen, um die geforderten Pilotgasmassenströme zu erreichen. Dies steht im Gegensatz zu dem Bedürfnis nach einer effizienten Betriebsmöglichkeit auch bei reduziertem Versorgungsdruck im Brennstoffnetz.

Aufgabe der Erfindung ist daher die Bereitstellung eines Verfahrens zum Betreiben einer Gasturbine, einer Vorrichtung zum Regeln des Betriebs einer Gasturbine und eines Kraftwerks, welches Verfahrens bzw. welcher Vorrichtung einen sicheren Betrieb selbst bei einem Mindestversorgungsdruck im Brennstoffnetz gewährleistet, der nur in geringem Maße über dem vom Verdichter der Gasturbine maximal erbringbaren Druckverhältnis liegt.

Die auf das Verfahren zum Betreiben einer Gasturbine gerichtete Aufgabe wird mit einem Verfahren gemäß den Merkmalen des Anspruchs 1 gelöst. Die auf die Vorrichtung gerichtete Aufgabe wird mit einer solchen gelöst, welche den Merkmalen des Anspruchs 7 entspricht. In Bezug auf die auf ein Kraftwerk gerichtete Aufgabe erfolgt die Lösung mit einem solchen gemäß den Merkmalen des Anspruchs 9.

Allen Lösungen ist gemein, dass die hier vorgestellte Erfindung auf der Idee basiert, den für Sonder-Betriebszustände wie Start, Brennstoffwechsel, Lastabwurf oder Ähnliches nur kurzzeitig benötigten erhöhten Brennstoffdruck bzw. nur kurzzeitig benötigten erhöhten Brennstoffmassenstrom aus einem Brennstoffspeicher - beispielweise einem Sammeltank - bereitzustellen und diesen dann im Bedarfsfall dem dem Brennstoffnetz entnommenen Brennstoff druckerhöhend zuzuführen. Vorzugsweise werden nur identische gasförmige Brennstoffe bei der Durchführung des erfindungsgemäßen Verfahrens zusammengeführt. Erste Abschätzungen zeigen, dass selbst bei stationären Gasturbinen, die eine Leistung zwischen Einhundert MW und Vierhundert MW abgegeben können, eine Tankgröße von etwa 1 m³ - 3 m³ schon ausreichen würde, um die erforderlichen Brennstoffmengen bei entsprechendem Druck zu speichern. Zum Druckaufbau im Brennstoffspeicher reicht ein einfacher Gaskompressor mit geringer Fördermenge aus, da zum Auffüllen des Brennstoffspeichers in der Regel ausreichend Zeit zur Verfügung steht. Ein solcher Gaskompressor ist um ein vielfaches günstiger und zuverlässiger als ein Brennstoffkompressor, welcher den gesamten Brennstoffmassenstrom während des Betriebs auf dem hohen Druckniveau dauerhaft bereitstellen muss.

Im Gegensatz zu den bisherigen, aus dem Stand der Technik bekannten Vorgehensweisen lässt sich mit der Erfindung die Gasturbine auch mit vergleichsweise geringem Versorgungsdruck im Brennstoffnetz sicher und zuverlässig betreiben. Selbst bei den Sonder-Betriebszuständen "Start", "Brennstoffwechsel" und "Lastabwurf" wird der dann zusätzlich benötigte Brennstoffmassenstrom, insbesondere für den oder die Pilotbrenner, dem Brennstoffspeicher entnommen, welcher vorher mit Hilfe eines einfachen Gaskompressor mit dem Brennstoffvolumen befüllt wurde. Das Brennstoffvolumen wurde dabei selbstverständlich vorher dem Brennstoffnetz entnommen.

Die vorgeschlagenen Maßnahmen reduzieren die Anforderungen an den Versorgungsdruck im Brennstoffnetz erheblich. Durch den Wegfall des Brennstoffkompressors für vergleichsweise hohe Brennstoffdrücke bei hohen Brennstoffmassenströmen können hohe Kosten eingespart werden, einerseits für die Anschaffung eines derartig leistungsfähigen Brennstoffkompressors als auch für dessen Betrieb während des Betriebs der Gasturbine. Vorteilhafte Ausgestaltungen sind in den Unteransprüchen angegeben.

Gemäß einem ersten vorteilhaften Verfahrensmerkmal weist das Brennstoffvolumen im Brennstoffspeicher einen höheren Druck auf als der Versorgungsdruck im Brennstoffnetz. Vorzugsweise ist der Druck im Brennstoffvolumen um den Faktor zwei bis vier größer als der Versorgungsdruck im Brennstoffnetz. Damit wird sichergestellt, dass bei Bedarf das Brennstoffvolumen unverzüglich und in ausreichendem Umfang der Verbrennung in der Brennkammer zugeführt werden kann.

Vorzugsweise ist der Rotor der Gasturbine bei zur Energieerzeugung eingesetzten Gasturbinen im Betrieb an einen elektrischen Generator angekoppelt, wobei der Generator seinerseits an ein Stromverteilungsnetz angeschlossen ist. Unter einem Lastabwurf im Sinne dieser Anmeldung wird verstanden, dass entweder eine schlagartige Reduzierung der vom Generator zu erbringenden elektrischen Leistung eintritt oder sogar die Trennung des Generators vom Stromverteilungsnetz erfolgt, sprich, die vom Generator zu erbringende elektrische Leistung sprungartig auf Null reduziert wird. Üblicherweise sind derartige Lastabwürfe ungeplant und treten somit nur im Störungsfall auf. Auch ist möglich, dass derartige Lastabwürfe bei der Inbetriebnahme von stationären Gasturbinen simuliert werden, um den zuverlässigen und sicheren Betrieb der Gasturbine vor dem ersten kommerziellen Betrieb garantieren zu können.

Zur Durchführung des voranbeschriebenen Verfahrens und dessen bevorzugten Ausführungsformen ist erfindungsgemäß eine Vorrichtung zum Regeln des Betriebs einer Gasturbine vorgesehen, die umfasst:
- einen Eingang, welchem ein Signal zuführbar ist, das in einem Sonder-Betriebszustand den Bedarf an zusätzlichem Brennstoff und/oder den Mangel an Gasversorgungsdruck repräsentiert,
- einen Ausgang, dessen Signal ein Stellorgan steuert, mit dessen Hilfe einem Brennstoff ein einem Brennstoffspeicher entnehmbares Brennstoffvolumen zuführbar ist und
- eine Einheit, die das Ausgangssignals in Abhängigkeit vom Eingangssignal steuert. Erfindungsgemäß umfasst das Kraftwerk zumindest eine Gasturbine und einen mit einem Brennstoffvolumen füllbaren Brennstoffspeicher sowie Mittel, mit denen das Brennstoffvolumen dem dem Brennstoffnetz stetig entnehmbaren Brennstoff zuführbar ist.

Vorzugsweise umfassen die vorgenannten Mittel eine den Brennstoffspeicher mit einem Leitungsabschnitt verbindende Leitung, in welcher Leitung ein Stellorgan zum Öffnen und Schließen der Leitung angeordnet ist. Um Druckstöße im zusammengeführten Brennstoffstrom zu vermeiden, kann im Brennstoffleitungssystem zumindest eine Strahlpumpe vorgesehen sein, welcher der dem Brennstoffnetz stetig entnehmbare Brennstoff als zu treibendes Medium und welcher das dem Brennstoffspeicher entnehmbare Brennstoffvolumen als Treibmedium zuführbar ist, wobei die betreffende Strahlpumpe ausgangsseitig mit zumindest einem Brenner der Gasturbine verbunden ist.

Die weitere Erläuterung der Erfindung erfolgt anhand der in der Zeichnung dargestellten Ausführungsbeispiele. Im Einzelnen zeigen:
- FIG 1: ein erstes Ausführungsbeispiel eines Brennstoffversorgungssystems eines Kraftwerks und
- FIG 2: eine alternative Ausgestaltung des Brennstoffversorgungssystems eines Kraftwerks mit einer Strahlpumpe.

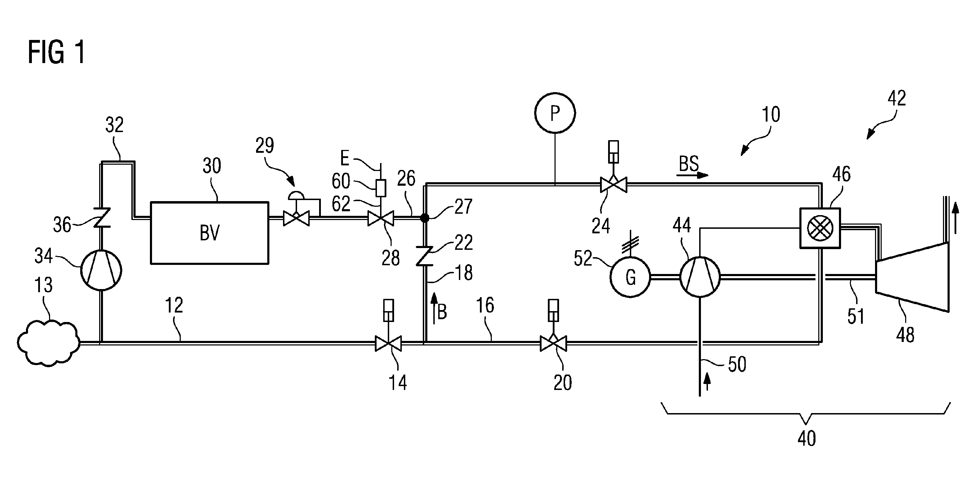

FIG 1 zeigt ein Kraftwerk 42 mit einer Gasturbine 40. Diese umfasst einen Verdichter 44 axialer Bauart, eine oder mehrere Brennkammern 46 sowie eine Turbineneinheit 48, welche ebenfalls in axialer Bauart ausgebildet ist. Während des Betriebs der Gasturbine 40 wird über eine Ansaugleitung 50 Umgebungsluft vom Verdichter 44 angesaugt und als verdichtete Verdichterendluft in die Brennkammer 46 eingespeist. Sowohl ein Pilot- als auch ein Haupt-Brennstoffstrom wird über einen oder mehrere Brenner bzw. Stufen der Brennkammer 46 bzw. den Brennkammern 46 zugeführt und in Verbindung mit der verdichteten Umgebungsluft zu einem Heißgas verbrannt, welches sich in der Turbineneinheit 48 arbeitsleistend an einem Rotor 51 der Gasturbine 40 entspannt. Dieser treibt einen daran angekoppelten Generator 52 zur Erzeugung von elektrischer Energie an.

Die Gasturbine 40 des Kraftwerks 42 ist über ein Brennstoff-Versorgungssystem 10 mit einem Brennstoffnetz 13 verbunden. Das Brennstoffnetz 13 ist in der Lage, die erforderliche Menge an gasförmigem Brennstoff zu liefern, um die Gasturbine 40 dauerhaft bei Nennlast zu betreiben. Im Detail umfasst neben weiteren, nicht dargestellten Komponenten das Brennstoff-Versorgungssystem 10 eine erste Brennstoffleitung 12, deren Eingang mit dem Brennstoffnetz 13 verbunden ist. In der ersten Brennstoffleitung 12 ist ein erstes Ventil 14 als Sicherheitsabsperrvorrichtung angeordnet. Stromab des ersten Ventils 14 teilt sich die erste Brennstoffleitung 12 in zwei Leitungsabschnitte 16, 18 auf. Der erste Leitungsabschnitt 16 ist Teil eines Hauptbrennstoffversorgungssystems und führt zu einem zweiten Ventil 20, mit dessen Hilfe das Volumen des Haupt-Brennstoffmassenstroms der Gasturbine 40 einstellbar ist. Der zweite Leitungsabschnitt 18 ist Teil eines Pilotbrennstoffversorgungssystems und führt über eine erste Rückschlagklappe 22 zu einem dritten Ventil 24, mittels dem das Volumen des Pilot-Brennstoffmassenstroms einstellbar ist, welcher zu dem Pilotbrenner oder den Pilotbrennern der Gasturbine 40 geführt werden kann.

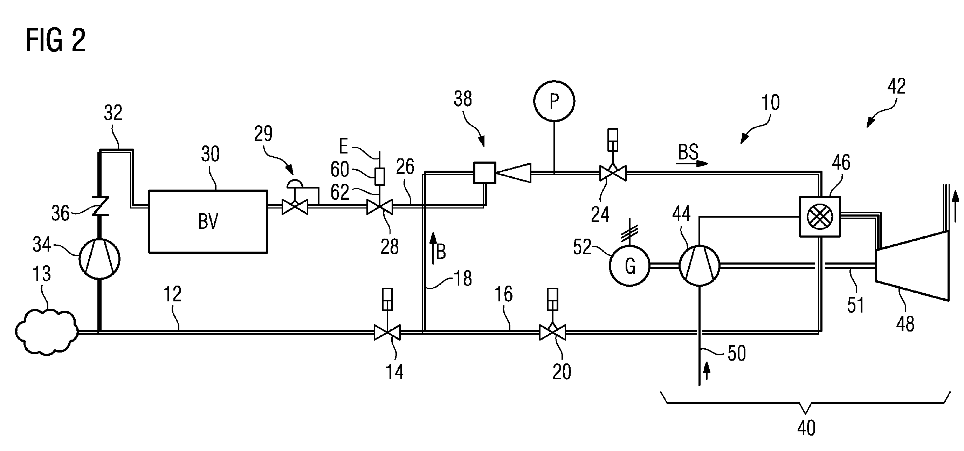

In den Leitungsabschnitt 18 mündet in einem Einspeisepunkt 27 stromab der Rückschlagklappe 22 eine weitere Brennstoffleitung 26. In dieser weiteren Brennstoffleitung 26 ist ein Absperrventil 28 und ein Druckminderer 29 vorgesehen. Das einströmseitige Ende der Brennstoffleitung 26 ist mit einem Brennstoffspeicher 30, welcher als Brennstofftank mit einem Volumen von beispielsweise 2 m³ ausgestattet ist, verbunden. Über eine Versorgungsleitung 32, in der ein Gaskompressor 34 und eine Rückschlagklappe 36 in Reihe geschaltet sind, kann dem Brennstoffspeicher 30 aus dem Brennstoffnetz 13 Brennstoff zugeführt werden, welcher dann bei Sonder-Betriebszuständen als Brennstoffvolumen BV verwendet werden kann. Die Verwendung des Druckminderers 29 erleichtert das Ausregeln von Druckschwankungen beim Öffnen des Absperrventils 28. Gemäß einer alternativen Ausgestaltung des Brennstoff-Versorgungssystems 10, welche in FIG 2 dargestellt ist, weist dieses an der Stelle des Einspeisepunktes 27 eine Strahlpumpe 38 auf, der als Treibmedium das im Brennstoffspeicher 30 speicherbare Brennstoffvolumen BV über die Leitung 26 und das darin angeordnete Ventil 28 zuführbar ist, um den im Leitungsabschnitt 18 strömenden Brennstoff B mit vergleichsweise geringem Druck im Gesamtdruck zu erhöhen.

Die beiden in den Figuren 1 und 2 dargestellten Ausführungsformen arbeiten in analoger Weise, wenn es darum geht, während des Startens der Gasturbine 40, bei einem Brennstoffwechsel und/oder bei Lastabwurf die in der Brennkammer 46 der Gasturbine 40 stattfindende Verbrennung zu stabilisieren, was nachfolgend beschrieben wird.

Vor dem Starten der Gasturbine oder auch nach der Entnahme eines Brennstoffvolumens BV aus dem Brennstoffspeicher 30 wird der Gaskompressor 34 betrieben, um den Brennstoffspeicher 30 mit einem Brennstoffvolumen BV (erneut) zu füllen. Das im Brennstoffspeicher 30 gespeicherte Brennstoffvolumen BV weist dann einen vorgegebenen, vergleichsweise hohen Druck auf, welcher um ein vielfaches - beispielsweise das 3-fache - größer ist als der Versorgungsdruck im Brennstoffnetz 13 bzw. als das vom Verdichter 44 maximal lieferbare Druckverhältnis.

Während des Startens der Gasturbine 40 wird dessen Rotor 51 mit Hilfe einer nicht dargestellten Drehvorrichtung oder mit Hilfe des Generators 52 auf eine Zünddrehzahl beschleunigt. Anschließend werden zumindest die Ventile 14, 24 geöffnet und die Pilotflamme gezündet, so dass eine Verbrennung in der Brennkammer 46 abläuft. Danach wird das zweite Ventil 20 geöffnet, so dass die Hauptverbrennung beginnt. Anschließend wird durch die stetige Steigerung des Brennstoffmassenstroms der Rotor bis zur Betriebsdrehzahl beschleunigt. Währenddessen auftretende Verbrennungsinstabilitäten können dann vermieden sicher werden, wenn mit oder unmittelbar nach dem Erreichen der betroffenen Drehzahlen ein zusätzliches dem Brennstoffspeicher 30 entnommenes Brennstoffvolumen BV mit dem dem Brennstoffnetz 13 entnommenen, im zweiten Leitungsabschnitt 18 strömenden Brennstoff B der Brennkammer 46 beispielsweise über die Pilotbrenner zugeführt wird. In diesem Fall kann eine besonders große Menge an Brennstoff B mit einem besonders hohen Druck so lange in die Brennkammer 46 eingespeist werden, bis die betroffenen Drehzahlen überwunden wurde. Aufgrund der so vergrößerten Pilot-Brennstoffmenge wird die vom Pilotbrenner erzeugte Flamme stabilisiert. Gleichzeitig werden unerwünschte thermoakustische Schwingungen sowie Flammenverlöschen sicher vermieden.

Um einen sprunghaften Anstieg des Drucks im zweiten Leitungsabschnitt 18 vor dem Ventil 24 zu vermeiden, muss das Ventil 28 entsprechend langsam geöffnet werden. Der Brennstoffstrom BS durch das Ventil 24 wird solange auch aus dem Brennstoffspeicher 30 gespeist, bis dessen Druck auf den normalen Versorgungsdruck, welcher im zweiten Leitungsabschnitt 18 vorherrscht, abgesunken ist.

Sofern ein Lastabwurf durchgeführt werden muss, ungeplant oder geplant bei der Inbetriebsetzung der Gasturbine 40, besteht die Möglichkeit, die Pilotflamme(n) in der bzw. den Brennkammer(n) 46 zu stabilisieren, indem mit oder unmittelbar nach dem Lastabwurf dem Brennstoffspeicher 30 das gasförmige Brennstoffvolumen BV durch Öffnen des Ventils 28 entnommen und dem im zweiten Leitungsabschnitt 18 strömenden, dem Brennstoffnetz 13 entnommenen Brennstoff B zuzuführen, wodurch der zusammengeführte Brennstoffstrom BS stromab des Einspeisepunkts 27 im Druck P erhöht ist. Die Druckerhöhung führt zu einer größeren in die Brennkammer 46 einströmenden Brennstoffmenge, was sich stabilisierend auswirkt.

Das voranbeschriebene Verfahren kann auch dann durchgeführt werden, wenn während des Betriebs der Gasturbine 40 ein Brennstoffwechsel vorgesehen ist. Bei dem Brennstoffwechsel wird von einem flüssigen Haupt-Brennstoff auf einen gasförmigen Haupt-Brennstoff - oder umgekehrt - umgestellt. Für diesen, etwa 30 Sekunden bis etwa 180 Sekunden andauernden Umschaltvorgang ist eine stabilisierte Verbrennung der Pilotflamme erforderlich, was nur durch das währenddessen zusätzlich eingedüste Brennstoffvolumen BV erreicht wird. Insofern erfolgt der Flammstabilisierungsbetrieb durch die Druckerhöhung mittels der Zugabe des Brennstoffvolumens BV zum Brennstoff nur für eine kurze Zeitdauer. Nach dem Brennstoffwechsel kann der Betrieb wie üblich - also ohne Zugabe des Brennstoffvolumens BV - fortgesetzt werden.

Gemäß der Ausgestaltung nach FIG 2 arbeitet das im Brennstoffspeicher 30 gespeicherte Brennstoffvolumen BV als Treibmedium für den Brennstoff B, welcher im zweiten Leitungsabschnitt 18 strömt und ursprünglich dem Brennstoffnetz 13 entnommen wurde. Die Zusammenführung des Brennstoffs B und des Brennstoffvolumens BV zum Brennstoffstrom BS erfolgt in der Strahlpumpe 38, so dass das Zusammenwirken beider Brennstoffströme B, BV für die nötige Druckerhöhung im Leitungsabschnitt 18 stromab der Strahlpumpe 38 wirkt. Durch die Verwendung der Strahlpumpe 38 kann der Brennstoffspeicher 30 kleiner ausgeführt werden. Auch ist dadurch ein wesentlich sanfterer Druckanstieg vor dem Ventil 24 beim Öffnen des Ventils 28 möglich. Dadurch kann das Ventil 28 möglicherweise sehr viel einfacher und somit preisgünstiger ausgeführt werden. Ggf. kann dadurch das Ventil 28 auch als Schaltventil ausgeführt werden - ein Regelventil ist dann nicht erforderlich.

Die Steuerung des Ventils 28 erfolgt mit Hilfe einer Vorrichtung 60. Die Vorrichtung 60 weist einerseits einen Eingang E auf, welchem ein den Bedarf an zusätzlichem Brennstoff bzw. den Mangel an Gasversorgungsdruck repräsentiert Signal zuführbar ist. Vorzugsweise handelt es sich dabei um die aktuelle Drehzahl des Gasturbinenrotors 51, um ein den Lastzustand der Gasturbine 40 oder um ein den Brennstoffwechsel repräsentierendes Signal. Weiter umfasst die Vorrichtung 60 einen Ausgang 62, dessen Signal ein Stellorgan, vorzugsweise das Ventil 28, steuert, mit dessen Hilfe dem im zweiten Leitungsabschnitt 18 strömenden Brennstoff B das dem Brennstoffspeicher 30 entnehmbare Brennstoffvolumen BV zugeführt werden kann. Außerdem umfasst die Vorrichtung 60 eine Einheit, die das Ausgangssignal in Abhängigkeit vom Eingangssignal gemäß der angegebenen Verfahren steuert.

Die in den Figuren 1 und 2 dargestellten Ausführungsbeispiele dienen lediglich der Erläuterung der Erfindung und sind für diese nicht beschränkend. So können insbesondere mehrere Brennkammern 46 vorgesehen sein, die jeweils einen Pilotbrenner und einen Hauptbrenner mit jeweils einer oder mehreren Stufen umfassen, wobei diese Pilotbrenner an das Brennstoff-Versorgungssystem 10 angeschlossen sind. Selbstverständlich können auch die Hauptbrenner zusätzlich mit dem dem Brennstoffspeicher entnommenen Brennstoffvolumen BV versorgt werden, um die Hauptflamme(n) während vergleichbarer Betriebszustände in analoger Weise zu stabilisieren. Die Beschreibung der Erfindung erfolgt anhand eines Beispiels mit gasförmigem Brennstoff. Die Verwendung von gasförmigem Brennstoff ist jedoch nicht zwingend. Selbstverständlich ist es auch möglich, dass im erfindungsgemäßen Brennstoff-Versorgungssystem 10 flüssige Brennstoffe gefördert werden. Auch eine Kombination flüssiger und gasförmiger Brennstoffe ist möglich, wobei jedoch nicht eine Vermischung von flüssigen und gasförmigen Brennstoffen im Einspeisepunkt 27 bzw. in der Strahlpumpe 38 vorgesehen ist, sondern die Trennung von gasförmigem Brennstoff und flüssigem Brennstoff in Bezug auf Pilotbrennstoff und Hauptbrennstoff erfolgt: der Pilotbrennstoff kann also gasförmig sein und der Hauptbrennstoff flüssig oder umgekehrt.

Das Kraftwerk 42 kann auch eine nicht weiter dargestellte Dampfturbinen-Einheit umfassen, dessen Rotor ebenfalls mit dem dargestellten Generator 52 auf einer gemeinsamen Welle, die dann auch als Wellenstrang bezeichnet wird, gekoppelt ist.

Insgesamt werden mit der Erfindung somit ein Verfahren zum Starten einer Gasturbine 40, ein Verfahren zum Betreiben einer Gasturbine 40 bei Lastabwurf oder Brennstoffwechsel, eine Vorrichtung 60 zum Regeln des Betriebs einer Gasturbine 40 sowie ein Kraftwerk 42 angegeben. Um einen sicheren Betrieb der Gasturbine 40 während des Startens, bei Lastabwurf oder bei Brennstoffwechsel trotz eines nur vergleichsweise geringen Versorgungsdrucks des Brennstoffnetzes 13 zu ermöglichen, ist vorgesehen, dass ein Brennstoffvolumen BV mit einem im Vergleich zum Versorgungsdruck im Brennstoffnetz 13 wesentlich erhöhten Druck bereitgestellt wird und im Bedarfsfall kurzfristig dem dem Brennstoffnetz 13 entnommenen Brennstoff B zu dessen Druckerhöhung zuzuführen. Durch die Bereitstellung eines vergleichsweise hohen Brennstoffdrucks kann die Pilotflamme in den erforderlichen Betriebsfällen stabilisiert brennen. Thermoakustische Schwingungen sowie ein Flammenverlöschen können auch vermieden werden, obwohl der vom Brennstoffnetz 13 dauerhaft bereitgestellte Versorgungsdruck vergleichsweise gering ist.

## Patentansprüche

1. Verfahren zum Betreiben einer Gasturbine (40),
mit den Schritten:
- stetige Entnahme von Brennstoff (B) aus einem Brennstoffnetz (13) und
- Verbrennen des Brennstoffs (B) unter Zugabe von Verbrennungsluft in zumindest einer Brennkammer (46) der Gasturbine (40),
**dadurch gekennzeichnet, dass**
zur kurzfristigen Erhöhung des der Brennkammer (46) zugeführten Brennstoffstroms (BS) einem Brennstoffspeicher (30) ein Brennstoffvolumen (BV) entnommen und dem der Brennkammer (46) noch zuzuführenden Brennstoff (B) zugeführt wird.

2. Verfahren nach Anspruch 1,
bei dem die kurzfristige Erhöhung des Brennstoffstrom (BS)
- während des Startens der Gasturbine (40),
- bei einem Brennstoffwechsel und/oder
- mit oder unmittelbar nach dem Lastabwurf
durchgeführt wird.

3. Verfahren nach Anspruch 1 oder 2,
bei dem das Brennstoffvolumen (BV) einen höheren Druck aufweist als der dem Brennstoffnetz (13) entnommene Brennstoff (B).

4. Verfahren nach Anspruch 3,
bei dem der Druck des Brennstoffsvolumens (BV) um das zweifache bis vierfache größer ist als der Versorgungsdruck im Brennstoffnetz (13).

5. Verfahren nach einem der Ansprüche 2, 3 oder 4,
jedoch nicht nach Anspruch 1,
bei dem die Gasturbine (40) im Betrieb einen elektrischen Generator (52) antreibt, welcher an ein Stromverteilungsnetz angeschlossen ist und bei dem der Lastabwurf durch eine schlagartige Reduzierung der vom Generator (52) zur erbringenden elektrischen Leistung oder durch die Trennung des Generators (52) vom Stromverteilungsnetz erfolgt.

6. Verfahren nach einem der Ansprüche 2 bis 5,
jedoch nicht nach Anspruch 1,
bei dem der Lastabwurf unplanmäßig ist oder simuliert wird.

7. Vorrichtung (60) zum Regeln des Betriebs einer Gasturbine (40),
- mit einem Eingang (E), welchem ein Signal zuführbar ist, das den Bedarf an zusätzlichem Brennstoff bzw. den Mangel an Gasversorgungsdruck repräsentiert,
- mit einem Ausgang (62), dessen Signal ein Stellorgan (28) steuert, mit dessen Hilfe einem Brennstoff (B) ein einem Brennstoffspeicher (30) entnehmbares Brennstoffvolumen (BV) zuführbar ist und
- mit einer Einheit, die das Ausgangssignals in Abhängigkeit vom Eingangssignal steuert.

8. Vorrichtung (60) nach Anspruch 7,
zum Durchführen des Verfahrens nach einem der Ansprüche 1 bis 6.

9. Kraftwerk (42),
umfassend eine Gasturbine (40) mit zumindest einer Brennkammer (46) und einem Verdichter (44), wobei der Brennkammer (46) vom Verdichter (44) bereitgestellte Verbrennungsluft und von einem Brennstoffnetz (13) stetig entnehmbarer Brennstoff (B) zuführbar ist,
**dadurch gekennzeichnet,**
**dass** ein mit einem Brennstoffvolumen (BV) füllbarer Brennstoffspeicher (30) vorgesehen ist und Mittel vorgesehen sind, mit denen das Brennstoffvolumen (BV) dem dem Brennstoffnetz (13) stetig entnehmbaren Brennstoff (B) zuführbar ist.

10. Kraftwerk (42) nach Anspruch 9,
bei dem die Mittel eine den Brennstoffspeicher (30) mit einem Leitungsabschnitt (18) verbindende Leitung (26) umfasst, in welcher Leitung (26) ein Stellorgan (28) zum Öffnen und Schließen der Leitung (26) angeordnet ist.

11. Kraftwerk (42) nach Anspruch 10,
mit zumindest einer Strahlpumpe (38), welcher der dem Brennstoffnetz (13) stetig entnehmbare Brennstoff (B) und welcher das dem Brennstoffspeicher (30) entnehmbare Brennstoffvolumen (BV) als Treibmittel zuführbar ist, wobei die betreffende Strahlpumpe (38) ausgangsseitig mit zumindest einem Brenner der Gasturbine (40) verbunden ist.

12. Kraftwerk (42) nach Anspruch 9, 10 oder 11,
mit einer Vorrichtung (60) nach einem der Ansprüche 7 oder 8.
